(19) Europäisches Patentamt
European Patent Office
Office européen des brevets

(11) **EP 2 706 714 A1**

(12) **EUROPEAN PATENT APPLICATION**

(43) Date of publication:
**12.03.2014 Bulletin 2014/11**

(51) Int Cl.:
*H04L 27/26* (2006.01)  *H04B 1/00* (2006.01)
*H04L 27/00* (2006.01)

(21) Application number: **12290298.4**

(22) Date of filing: **10.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Yu, Xin**
**70435 Stuttgart (DE)**

• **Chen, Yejian**
**70825 Komtal-Münchingen (DE)**
• **Heimpel, Holger Tim**
**70327 Stuttgart (DE)**

(74) Representative: **DREISS Patentanwälte PartG mbB**
**Patentanwälte**
**Postfach 10 37 62**
**70032 Stuttgart (DE)**

Remarks:
Amended claims in accordance with Rule 137(2) EPC.

(54) **Signal processing device and method of processing at least two input signals for a transmitter of a communications device**

(57) The invention relates to a method of processing at least two input signals (S1, S2) for a transmitter (200) of a communications device, particularly for a transmitter (200) of a cellular communications system, wherein signals (S1_1', S2') derived from said at least two input signals (S1, S2) are combined (410) with each other, preferably by means of an adder (206), to obtain a combined signal (S12), and wherein at least one predetermined auxiliary signal (a1, a2, a3) is inserted (400) into at least a first one (s1) of said two input signals (S1, S2) by means of a signal processing device (100) to obtain a modified first input signal (S1_1).

Fig. 1

## Description

### Field of the invention

The present invention relates to a method of processing at least two input signals for a transmitter of a communications device. The invention further relates to a signal processing device for processing at least two input signals for a transmitter of a communications device.

### Background

The recent standardization in the field of mobile communication systems focuses on so called Multi-Band (MB) and Multi-Standard-Radio (MSR) base stations, which are enabled by advances in RF, radio frequency, technology. It is desired to provide transmitters which are able to simultaneously transmit different signals, i.e. so called multiband signals, which comprise various signal portions in different RF frequency bands. A typical scenario for multiband signals is simultaneously transmitting radio frequency signals for LTE (long term evolution) and GSM (global system for mobile communications) standard compatible devices. Transmitters supporting such features should be able to send signals targeted at different radio frequency bands (e.g. first RF range at about 800 MHz and second RF range at about 2.1 GHz) by using a single power amplifier in order to avoid extra costs for multiple (band-specific) power amplifiers. The desired frequency spacings between the various radio frequency bands varies from hundreds of MHz up to the GHz range, e.g. LTE downlink bands 1 and 3 are located at 2110 MHz - 2170 MHz and 1805 MHz - 1880 MHz, respectively.

In view of this, it is an object of the present invention to provide an improved method of processing at least two input signals for a transmitter of a communications device and an improved signal processing device that enable an efficient operation of a power amplifier comprised within a transmitter of a communications device capable of multiband transmissions for said at least two input signals.

### Summary

According to the present invention, regarding the above-mentioned method, this object is achieved by combining signals derived from said at least two input signals with each other, preferably by means of an adder, to obtain a combined signal, and by inserting at least one predetermined auxiliary signal into at least a first one of said two input signals by means of a signal processing device to obtain a modified first input signal.

Inserting said predetermined auxiliary signal into said at least first input signal advantageously enables to modify a shape of the first input signal and thus also a shape of the combined signal, which is forwarded to a power amplifier of the transmitter thus influencing an operation of the power amplifier. By appropriately choosing the auxiliary signal and/or the position(s) of the first signal the auxiliary signal is inserted into, it is possible to reduce a peak to average power ratio (PAPR) of the combined signal which enables an increased efficiency of the operation of the power amplifier of said transmitter.

According to an embodiment, inserting an auxiliary signal only in said second input signal or in both input signals also enables to change the shape of the combined signal and thus to possibly modify PAPR of the combined signal.

According to a further advantageous embodiment, the first one of said input signals is a multi-carrier modulated signal, particularly a signal comprising a plurality of OFDM, Orthogonal Frequency Division Multiplexing, symbols. For instance, said first input signal may comprise OFDM symbols as known from the LTE standard, also cf. 3GPP (3rd Generation Partnership Project) TS 36.211 V8.7.0.

According to a further advantageous embodiment, the first input signal may also comprise other types of multi-carrier modulated signals or generally any signals that exhibit some kind of frame structure which enables to insert the auxiliary signal according to the embodiments between two subsequent frames of said frame structure (or at a beginning and/or end of a frame sequence) without corrupting the signal as such by doing so.

According to a further embodiment, a second one of said input signals is a) a multi-carrier modulated signal, particularly a signal comprising a plurality of OFDM symbols, or b) another type of signal, particularly a UMTS, universal Mobile Telecommunications System, signal. I.e., according to the present embodiment, the first and the second input signals may comprise multi-carrier symbols such as OFDM symbols as used in the LTE System. Alternatively, the first input signal may comprise OFDM symbols or generally multi-carrier modulated symbols, whereas the second input signal may comprise wide band signals such as e.g. employed by the UMTS downlink transmissions.

According to a further embodiment, said step of inserting comprises delaying a specific OFDM symbol (or generally, multi-carrier modulated symbol) so as to obtain, a gap between a preceding OFDM symbol and said specific OFDM symbol and inserting said auxiliary signal into said gap.

According to a further preferred embodiment, said auxiliary signal is a) a zero signal having zero amplitude, or b) a nonzero signal having a predetermined signal shape, wherein said predetermined signal shape is preferably known both at said transmitter and at a receiver that is configured to receive signals from said transmitter.

In the first case, i.e. the auxiliary signal representing a zero amplitude signal, inserting said auxiliary signal into said first input signal is equivalent to inserting respective delays between different OFDM symbols (or generally multi carrier modulated symbols), wherein said delays correspond with a signal duration of the predetermined auxiliary signal.

On the other hand, if nonzero signals are employed for the predetermined auxiliary signal according to the embodiments, it is preferred that said nonzero signals are known both at the transmitter and the receiver to facilitate efficient reception and demodulation of the signals.

According to a further embodiment, a combination of auxiliary signals having zero amplitude and nonzero amplitude is also possible.

When using the predetermined auxiliary signal according to an embodiment with a zero amplitude, it is usually sufficient to provide the processing device according to the embodiments at a transmitter, and no modifications of receivers i.e. mobile terminals of an LTE system or the like, are required as long as the signal duration of the predetermined auxiliary signals according to the embodiment does not exceed a threshold value. Only if said threshold value is exceeded, i.e. if the delay introduced by a zero amplitude auxiliary signal according to the embodiments is so large that a receiver cannot properly decode two subsequent LTE OFDM symbols any more, the receiver, too, should be modified to consider the delay introduced by a zero amplitude auxiliary signal according to the embodiments.

However, when (also) using auxiliary signals having nonzero amplitude, it is preferred to provide a signal shape for the auxiliary signals which is known both at the transmitter and the receiver in order to facilitate an efficient reception of said signals.

According to a further embodiment, said auxiliary signal is inserted at a plurality of different positions of said first signal. For instance, when said first signal is a sequence of OFDM symbols according to the LTE standard, one or more auxiliary signals according to the embodiments may be inserted between different OFDM symbols of said first input signal, and/or at the beginning and/or end of a sequence of such OFDM symbols.

According to a further embodiment, said signal processing device determines a measure which characterizes a peak to average power ratio (PAPR) of said combined signal. Thus, it is possible to assess the effect of inserting the predetermined auxiliary signal according to the embodiments on the combined signal, and a closed-loop control may be established that enables optimizing the placement and configuration of auxiliary signals according to the embodiments in order to e.g. minimize said peak to average power ratio (PAPR) of the combined signal thus enabling a very efficient operation of a power amplifier comprised in a transmitter that is supplied with a modified first input signal and the second input signal for multiband transmission. According to a further embodiment, said signal processing device determines a beat signal which represents a sum of absolute values of said input signals. Advantageously, the calculation of the beat signal requires only few processing resources and a comparatively low bandwidth, since the maximum required processing bandwidth for determining the beat signal is in the range of the bandwidth of the input signals so processed, i.e. particularly not in the range of the target RF ranges comprised in the combined signal. The signal processing device may also be configured to determine a beat signal depending on the modified first input signal and the second input signal in order to assess the effect of inserting the auxiliary signal according to the embodiments on the beat signal.

According to a further preferred embodiment, the processing device selects a configuration of auxiliary signals which results in a beat signal that comprises a minimum absolute maximum value. This is approximately equivalent to a minimum peak to average power ratio of the combined signal, under the assumption that the average power of combined signal does not change due to insertion of auxiliary signals.

According to a further embodiment, said signal processing device determines at least two different variants of said modified first input signal depending on said first input signal by at least one of the following steps:

- Inserting the same auxiliary signal at different positions of said first input signal,

- Inserting different auxiliary signals into said first input signal at at least one same or different position(s) of said first input signal.

According to a further embodiment, said signal processing device determines for two or more of said variants a) a measure which characterizes a peak to average power ratio (PAPR) of said combined signal and/or b) a beat signal, which represents a sum of absolute values of a respective variant of said first input signal (or the modified input signal obtained therefrom, respectively) and said second input signal (or a modified second input signal obtained therefrom, respectively), and said signal processing device selects a specific variant for further processing, i.e. for combining with said second input signal, which satisfies at least one predetermined criterium with the respect to said peak to average power ratio of said combined signal and/or said beat signal.

I.e. the step of selecting for further processing is employed for choosing the most promising variant of the modified input signal regarding a low peak to average ratio or a low absolute maximum of the beat signal.

According to a further embodiment, said step of selecting for further processing comprises combining said specific variant, or a signal derived therefrom (e.g., by upconverting said specific variant to a target radio frequency, RF, range), with said second signal or a signal derived from said second signal (e.g., by upconverting said second input signal to a target RF range).

According to another preferred variant, said combined signal or a signal derived therefrom is amplified by an amplifier. If the PAPR of the combined signal (and thus also of a signal derived therefrom) is reduced by applying the auxiliary signal according to the embodiments, the amplifier may advantageously be operated in a particularly efficient manner.

According to a further embodiment, said signals derived from said at least two input signals are obtained by upconverting the modified first input signal and the second input signal to a radio frequency range. For this purpose, one or more local oscillators may be provided in a per se known manner wherein the respective frequencies of the local oscillators may correspond with the target RF range for the desired multiband processing (e.g., about 800 MHz for a GSM signal corresponding with said second input signal and about 2.1 GHz for an LTE signal corresponding with said first input signal).

A further solution to the present invention is given by a signal processing device according to claim 14.

According to a further preferred embodiment, said signal processing device is configured to insert a predetermined auxiliary signal into two or more of said input signals. i.e., to achieve an advantage in PAPR reduction, it may be sufficient to insert one or more auxiliary signals into one of a plurality of input signals. However, it is also possible to insert one or more auxiliary signals not only to one input signal, but also to two or more (or all) input signals. In this way one is able to apply the auxiliary signals according to the embodiments to more than one input signal, whereby a number of auxiliary signals per input signal (and possibly a delay associated therewith) may be reduced.

Further advantageous embodiments are presented in the dependent claims.

**Brief description of the figures**

Further features, aspects and advantages of the present invention are given in the following detailed description with reference to the drawings in which:

Figure 1          Schematically depicts a block diagram of a transmitter with a signal processing device according to an embodiment,

Figure 2          schematically depicts a block diagram of a first operational scenario of a processing device according to an embodiment,

Figure 3          schematically depicts a block diagram of a second operational scenario of a processing device according to an embodiment,

Figure 4          schematically depicts a block diagram of a signal processing device according to an embodiment,

Figure 5          schematically depicts a block diagram of a processing device according to a further embodiment,

Figure 6a, 6b     schematically depicted local oscillator stages for upconverting input signals as processed by a signal processing device according to an embodiment,

Figure 7          schematically depicts a simplified flow chart of a method according to the embodiments,

Figure 8a- 8f     schematically depict a complementary cumulative distribution function (CCDF) of a beat signal for various operational scenarios according to the embodiments,

Figure 9          schematically depicts a block diagram of a signal processing device according to an embodiment,

Figure 10         schematically depicts an input signal according to an embodiment,

Figure 11a- 11f   schematically depicted various configurations of modified input signals according to different embodiments,

Figure 12         schematically depicts an auxiliary signal as employed by a processing device according to an embodiment, and

Figure 13a, 13b     depict signals evaluated according to an embodiment.

**Description of the embodiments**

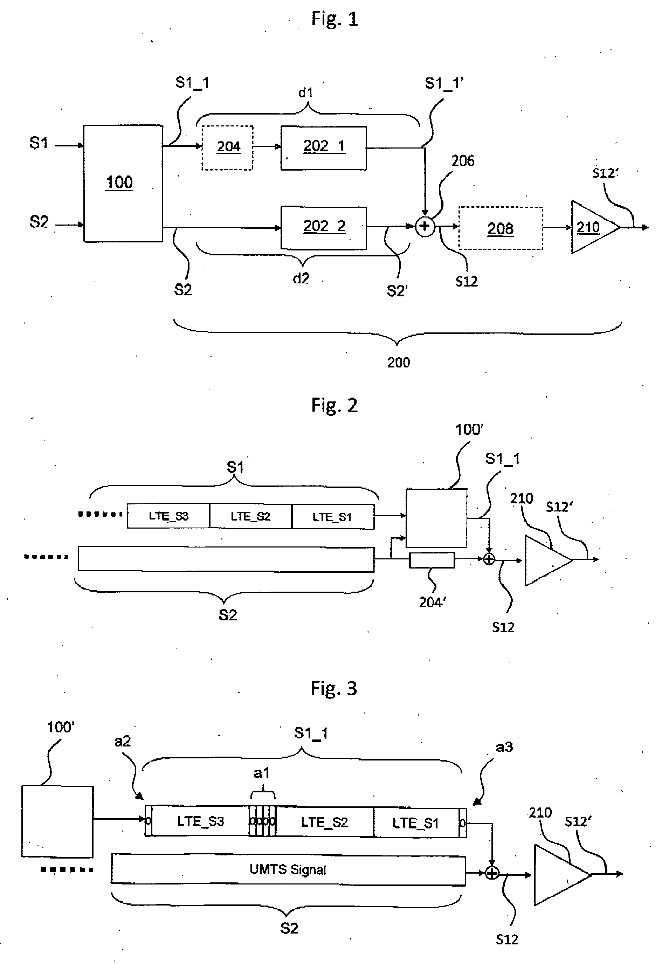

Figure 1 schematically depicts a simplified block diagram of a transmitter 200 capable of multiband transmission and an associated signal processing device 100 according to a first embodiment.

The signal processing device 100 receives a first input signal S1 and a second input signal S2. The input signals S1, S2 may e.g. be digital baseband signals each of which is to be transmitted by said transmitter 200 in a respective radio frequency band. For example, the first input signal S1 may represent a digital baseband signal according to the LTE standard which is to be transmitted by the transmitter 200 in a frequency range as provided by the LTE standard.

In contrast, the second input signal S2 may represent a digital baseband signal according to the UMTS standard, which is to be transmitted by the transmitter 200 in a respective second radio frequency band which is different from the first radio frequency band as provided by the LTE standard. In so far, the transmitter 200 represents a multi-band capable transmitter since it is capable of processing, i.e. transmitting, different signals in different RF bands.

Instead of providing digital baseband signals S1, S2, it is also possible to provide intermediate frequency (IF) signals as input signals to the processing device 100 according to the embodiments.

The transmitter 200 comprises two processing branches 202_1 202_2. The first processing branch 202_1 is configured to process a modified first input signal S1_1 which is obtained at an output of the signal processing device 100 in a manner described in detail further below. The second processing branch 202_2 is provided for processing the second input signal S2, which may e.g. be output by the device 100 without modification.

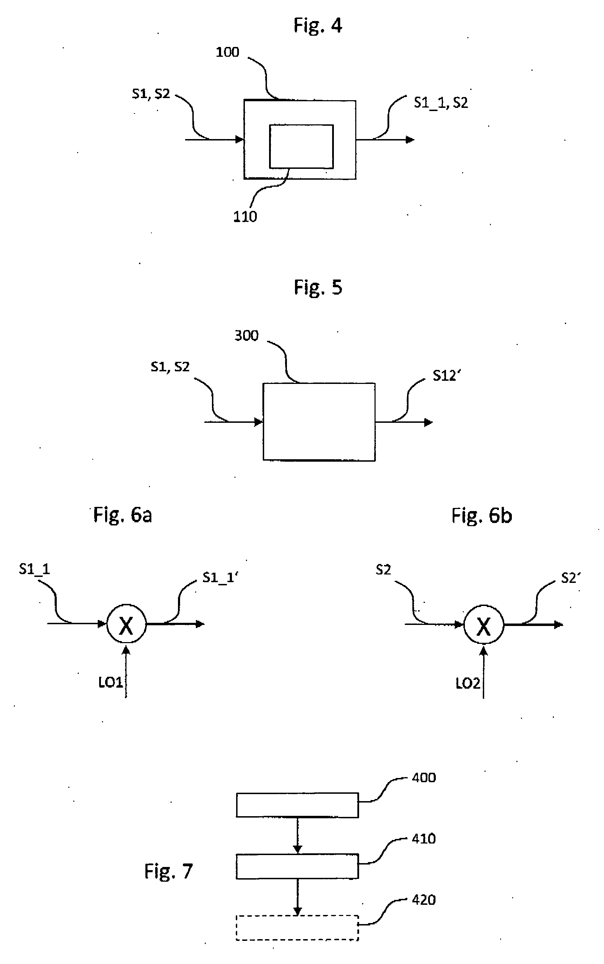

For example, according to an embodiment, the first processing branch 202_1 may comprise first local oscillator means LO1 as depicted by figure 6a, which are employed for upconverting the modified input signal S1_1 to a desired radio frequency range. The upconverted signal which is obtained at an output of the local oscillator means LO1 is denoted with the reference numeral S1_1'.

Likewise, the second processing branch 202_2 may comprise second local oscillator means LO2 to upconvert the second input signal S2 to obtain an upconverted signal S2'.

According to an embodiment, the output signals S1_1, S2 of device 100 may still be digital signals. In this case, a digital-to-analog (D/A) conversion of said output signals S1_1, S2 may e.g. be performed by respective D/A converter means (not shown) that may be integrated in said local oscillator means LO1, LO2, preferably upstream a multiplier X used for upconversion. Alternatively, a D/A conversion may also be performed within device 100 or by separate D/A converters arranged between the devices 100, 202_1, 202_2.

The upconverted signal S1_1' (Fig. 1) preferably represents a radio frequency signal compatible to the LTE standard, whereas the upconverted signal S2' preferably represents an RF signal compatible with the UMTS standard.

Both upconverted signals S1_1' and S2' are combined by means of an adder 206 (e.g. RF capable adder network or the like), cf. figure 1, whereby a combined signal S12 is obtained. Optionally, further processing such as predistortion measures and the like may be performed with respect to the combined signal S12 which is represented by the block 208 of figure 1. The output of block 208 - or the combined signal S12 - is forwarded to a power amplifier 210, which amplifies the combined signal S12 to obtain an amplified RF output signal S12' that may e.g. be transmitted by an antenna (not shown).

Optionally, a delay block 204 may be provided at one of the branches 202_1, 202_2 to account for different processing delays within these branches. Thus, a processing delay of the chain d1 of devices 204, 202_1 may be controlled to be equal to the chain d2.

In order to modify a peak to average power ratio (PAPR) of the combined signal S12 that is forwarded to the power amplifier 210, the method according to the embodiments proposes to modify at least the first input signal S1 by inserting at least one predetermined auxiliary signal into said first input signal S1. As a result, a modified first input signal S1_1 is obtained at an output of the signal processing device 100. By appropriately choosing the number and shape of the auxiliary signals so applied to the first input signal S1, the PAPR of the combined signal S12 may be influenced, i.e. so as to attain a minimum value, which enables a particularly efficient operation of the power amplifier 210.

Figure 2 schematically depicts a first operational scenario of the processing device 100 (Figure 1) according to an embodiment. According to figure 2, the first input signal S1 comprises OFDM symbols, such as LTE_S1, LTE_S2, LTE_S3 and so on, which are forwarded in sequence to a respective calculation unit 100' of the signal processing device 100 according to figure 1. The calculation unit 100' inserts at least one predetermined auxiliary signal into the first input signal S1, whereby the modified first input signal S1_1 is obtained at an output of the calculation unit 100'. As can be seen from figure 2, the second input signal S2 to the processing device 100 (figure 1) is not modified, apart from applying a delay by delay block 204' in analogy to delay block 204 of Fig. 1. The modified first input signal S1_1 is combined with the second input signal S2 by means of an adder (also cf. reference numeral 206 of figure 1), whereby the combined signal S12 is obtained. For the sake of clarity, the processing branches 202_1, 202_2 according to figure 1, which inter alia may provide for an upconversion to a RF range, are omitted in figure 2. However, the signals S1_1 S2 may well be upconverted in the above-explained manner, i.e. prior to combining (i.e., the modified signal S1_1 obtained at the output of device 100' may be upconverted as explained above prior to combining). The combined signal so obtained is forwarded to the power amplifier 210 for amplification, whereby the amplified RF output signal S12' is obtained.

Figure 3 depicts a further operational scenario of the configuration according to figure 1, wherein details of the modified first input signal S1_1 are given. More specifically, from figure 3 it can be seen that the modified first input signal S1_1 still comprises the OFDM symbols LTE_S1, LTE_S2, LTE_S3. However, in contrast to the unmodified first input signal S1 (figure 2), the modified first input signal S1_1 comprises a first auxiliary signal a1 arranged between the second OFDM symbol LTE_S2 and the third OFDM symbol LTE_S3. Further, a second auxiliary signal a2 is arranged after the third OFDM symbol LTE_S3 and a third auxiliary signal a3 is arranged prior to the beginning of the first OFDM symbol LTE_S1.

In effect, the insertion of the various auxiliary signals, a1, a2, a3 results in a slight delay of the respective OFDM symbols LTE_S1, LTE_S2, LTE_S3, the value of the delay depending on the signal length of the auxiliary signals a1, a2, a3 and their positions relative to the respective OFDM symbols. When combining the so modified first input signal S1_1 with the (presently unmodified) second input signal S2, which may e.g. represent a UMTS signal, a combined signal S12 is obtained which comprises a different PAPR characteristic as compared to a combined signal that would be obtained from an unmodified first input signal S1 and an unmodified second input signal S2. Thus, the PAPR of the input signal S12 to the power amplifier 210 can be modified by applying the auxiliary signals a1, a2, a3 according to the embodiments.

Again, in the context of figure 3, it is to be noted that the upconversion branches 202_1, 202_2 are not depicted, but may be included to provide upconverted variants of the signals S1_1, S2 in analogy to the above explanations with respect to figure 2, whereby the upconverted variants of the signals S1_1, S2 are fed to the combiner which forms the combined signal S12.

Figure 4 depicts a simplified block diagram of a signal processing device 100 according to an embodiment. The signal processing device 100 comprises a calculation unit 110 that may comprise or be implemented in a microprocessor or a digital signal processor (DSP) or an FPGA (field programmable gate array) or an ASIC (application specific integrated circuit), wherein these devices may be configured to perform the method according to the embodiments.

At its input, the signal processing device 100 receives the first input signal S1 and the second input signal S2, e.g. in the form of digital baseband signals.

In a further embodiment, the signals S1, S2 may also be provided in the form of analog baseband signals, digital or analog IF signals, and the like. However, digital processing of baseband type signals is preferred due to comparatively moderate processing resources required therefore.

After modifying the first input signal S1, the processing device 100 outputs the modified first input signal S1_1 and an unmodified second input signal S2.

According to a further embodiment, the processing device 100 may also be configured to also modify the second input signal S2. This is particularly preferred in such cases, where the second input signal S2 also comprises OFDM or generally multi-carrier modulated signals or symbols, respectively, or corresponding data frames that allow for inserting the auxiliary signals a1, a2, a3 (Figure 3) in the sense of the embodiments. In this way one is able to split the auxiliary signals in both signals S1 and S2 and hence reduce the number of auxiliary signals (delay) inserted in signal S1. However, in such cases where the second input signal S2 represents a UMTS signal or another wide band-type signal, which may not be modified by inserting auxiliary signals in the sense of the embodiments, it is preferred that the processing device 100 only modifies the first input signal S1.

The output signals S1_1, S2 of device 100 of Fig. 4 may be D/A converted and after that upconverted, i.e. by using the branches 202_1, 202_2 of Figure 1, prior to combining the so obtained upconverted signals S1_1, S2'.

Figure 5 depicts a signal processing device 300 according to a further embodiment. In contrast to the device 100 according to figure 4, the device 300 according to figure 5 comprises integrated processing branches 202_1 202_2, a combiner 206 (figure 1), optional further processing means 208 (cf. Fig. 1, e.g. for predistortion purposes), and a power amplifier 210 (Fig. 1). Further, the processing device 300 may comprise the functionality of the processing device 100 as explained above with reference to figure 1 to 4.

Figure 7 depicts a simplified flow chart of a method according to an embodiment. In a first step 400, at least one predetermined auxiliary signal a1 (figure 3) is inserted into the first input signal S1, whereby the modified first input signal S1_1 is obtained. In the subsequent step 410, signals derived from said at least two input signals S1, S2 are combined, e.g. by means of the adder 206 (figure 1). The signals derived from the input signals S1, S2 may e.g. be represented by the upconverted modified first input signal S1_1' and by the upconverted second input signal S2', cf. figure 1. Prior to upconversion, a D/A conversion may also take place as mentioned above.

Optionally, in the further step 420 according to figure 7, a resulting PAPR or a measure characterizing the PAPR of the combined signal S12 (figure 1) is calculated to assess the effect of the insertion of the auxiliary signal that has been performed in step 400. Thus, such auxiliary signals may be determined which yield a minimum PAPR of beat signal for given input signals S1, S2.

For instance, the PAPR determination of step 420 may be performed for different configurations of auxiliary signals at given input signals S1, S2 in real time, and after the best configuration of auxiliary signals (i.e., resulting in minimum PAPR of combined signal S12) has been found in a predetermined parameter range for said auxiliary signals, the device 100 may modify the input signal S1 by using said best configuration of auxiliary signals. It is particularly beneficial if the PAPR determination can be made in real time for a plurality of different configurations of auxiliary signals, because in this case a closed-loop control may be established that picks the best configuration of auxiliary signals which yield the minimum PAPR for given input signals S1, S2.

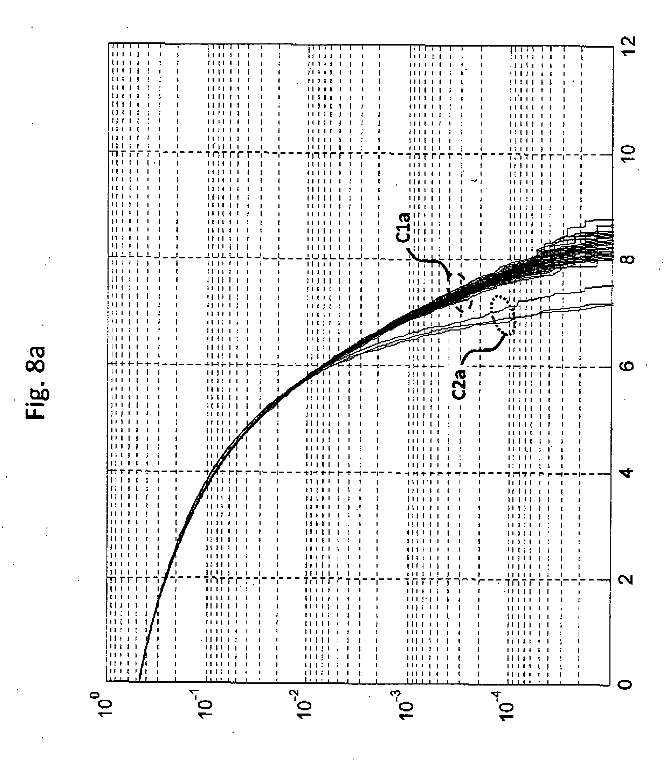

Figures 8a to 8f each depict a complementary cumulative distribution function (CCDF) of a beat signal as obtained from different operational scenarios according to the embodiments.

The beat signal represents a sum of absolute values of the input signals S1, S2 and may advantageously be considered to assess the PAPR of the combined signal S12.

The beat signal and its determination depending on input signals S1, S2 similar to those as mentioned above with reference to Fig. 1 to 7, is explained hereafter.

As an example according to a further embodiment, it is supposed that two identical real signals S1 and S2 are to be transmitted by transmitter 200 (Figure 1) in two fragmented frequency bands e.g. with two local oscillators LO1, LO2 as depicted by Fig. 6a, 6b, wherein each local oscillator LO1, LO2 is associated with one of the desired target RF ranges for the signals *S*1 and *S*2. The signals S1, S2 may mathematically be represented by:

$$S1 = S2 = \cos\left(2\pi f_s \cdot t\right) \text{ (equation 1).}$$

Further, local oscillator signals LO1, LO2 may be represented by:

$$LO1 = e^{j\left(2\pi f_{LO} - 2\pi\Delta f\right)t} \text{ (equation 2)}$$

$$LO2 = e^{j\left(2\pi f_{LO} + 2\pi\Delta f\right)t} \text{ (equation 3),}$$

with

$$\Delta f = \left|\frac{f_{LO1} - f_{LO2}}{2}\right| \text{ (equation 4)}$$

$$f_{LO} = \left|\frac{f_{LO1} + f_{LO2}}{2}\right| \text{ (equation 5)}$$

and

with $f_{LO1}$, $f_{LO2}$ representing the frequencies of the local oscillators, wherein $\Delta f$ represents a frequency spacing between the different local oscillators and the RF ranges defined thereby.

A resulting RF signal sum $S_{RF}$, which is obtained by upconverting the signals *S*1, *S*2 of equation 1 above by means of the local oscillator signals according to equations 2, 3 above and by combining, e.g. adding, the upconverted signals, can be given by:

$$S_{RF} = real(S1 \cdot LO1) + real(S2 \cdot LO2);$$
$$= \cos(2\pi f_S \cdot t) \cdot \cos\big((2\pi f_{LO} - 2\pi \Delta f) \cdot t\big) + \cos(2\pi f_S \cdot t) \cdot \cos\big((2\pi f_{LO} + 2\pi \Delta f) \cdot t\big)$$

$$S_{RF} = 2 \cdot \cos(2\pi f_S \cdot t) \cdot \cos(2\pi f_{LO} \cdot t) \cdot \cos(2\pi \Delta f \cdot t) \quad \text{(equation 6)}$$

For example, it is assumed that the frequencies $f_{LO}$ and $\Delta f$ are located in GHz and hundreds of MHz region, respectively, e.g. $f_{LO}$ =1.4$GHz$ and $\Delta f$ = 600$MHz$. Furthermore, the frequency $f_S$ of the input signals is much lower in comparison to the frequencies $f_{LO}$ and $\Delta f$, normally from several MHz to dozens of MHz.

Therefore, the signal 2·cos($2\pi f_S \cdot t$) is modulated by the frequency $\Delta f$ and the product of signal 2·cos($2\pi f_S \cdot t$) ·cos($2\pi\Delta f \cdot t$) is modulated again by the frequency $f_{LO}$.

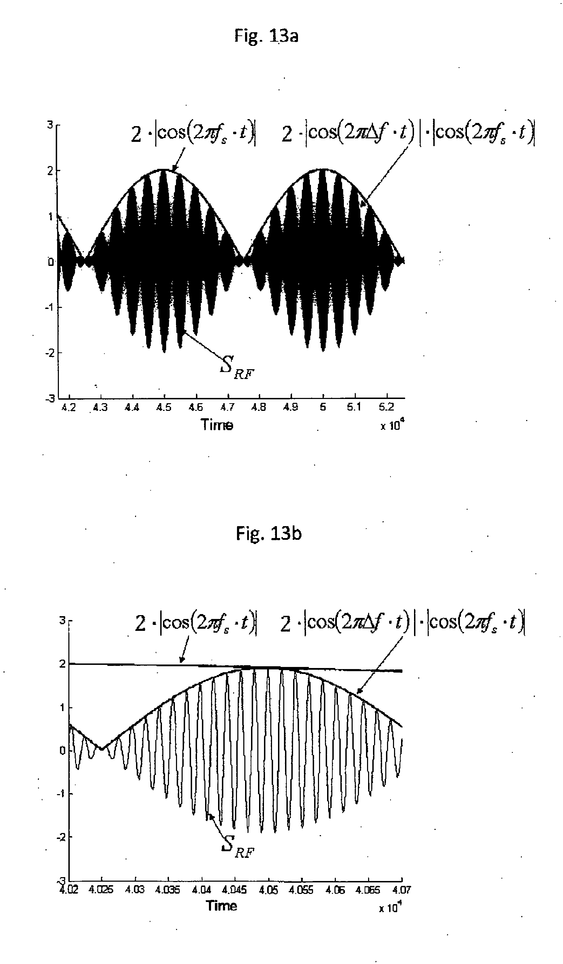

Figure 13a depicts a graph of a numerical simulation of the above explained equations, and Figure 13b depicts a detail view of Figure 13a. It is to be noted that the RF signal $S_{RF}$ is drawn as a closed black surface in Figure 13a due to the limited resolution of the depiction. However, in Figure 13b the proper sinusoidal shape of the RF signal $S_{RF}$ can be seen.

The envelope signal of the RF signal $S_{RF}$ is represented by 2·cos($2\pi f_S \cdot t$)·cos($2\pi\Delta f \cdot t$), cf. Figure 13a, 13b, and the beat signal is represented by 2·|cos($2\pi f_S \cdot t$)| .

Generally, under the condition that the maximal base band frequency of the input signals S1, S2 is much smaller than the frequency spacing $\Delta f$ of the multiband signal as well as the frequency spacing is much smaller than the lowest RF target band within the multiband signal, one can consider said beat signal as an "envelope" signal over the real envelope signal (in a strict mathematical sense) of the RF signal $S_{RF}$. Moreover, the beat signal can be easily calculated by:

$$S_{beat} = \Big|\cos\big(2\pi f_S \cdot t\big)\Big| + \Big|\cos\big(2\pi f_S \cdot t\big)\Big|$$

The beat signal of a multiband signal composed by 2 baseband input signals $S1_{baseband}$, $S2_{baseband}$ can be computed by: $S_{beat} = |S1_{baseband}| + |S2_{baseband}|$. Such calculation may e.g. be performed by the device 100 (Fig. 1) according to the embodiments. In a real system, S1, S2 are likely to be time-discrete digital signals (in contrast to the time-continuous signals as used for the above explanations with respect to Fig. 13a, 13b). Nevertheless, the same principles apply to the processing of the time-discrete digital signals S1, S2.

Particularly, it is evident that the maximum bandwidth of the beat signal depends on the maximum bandwidth of the individual input signals S1, S2, thus being much smaller than the frequency spacing $\Delta f$ that may be effected by different local oscillators LO1, LO2 used for RF upconversion.

In analogy, the beat signal of a multiband signal composed by N base band input signals $Si_{baseband}$ can be computed by:

$$S_{beat} = \sum_i^N \Big|Si_{baseband}\Big|$$

under the conditions mentioned above.

According to Applicant's analysis, gaining information on the PAPR of a multiband signal such as the combined signal S12 of Fig. 1 to Fig. 3, may advantageously be achieved by assessing the PAPR of the beat signal $S_{beat}$ defined above. Thus, advantageously, according to an embodiment, for assessing the PAPR of the combined signal S12, which in most cases will be an RF signal of considerable bandwidth (inter alia depending on the frequency spacing $\Delta f$), it is sufficient to determine the rather low-bandwidth beat signal and to determine its PAPR. This can efficiently be done by the device 100 according to the embodiments. Thus, device 100 may advantageously assess the PAPR of the beat signal, which comprises information on the PAPR of the combined signal S12, and device 100 may determine optimized auxiliary signals for insertion into at least one input signal S1 to reduce the PAPR of the beat signal and thus also the PAPR of the combined signal. Advantageously, a direct assessment of the PAPR of the combined signal S12 is not necessary, whereby costly RF circuitry and high-bandwidth components may be saved. Thus, according to a further embodiment, a PAPR reduction of the combined signal S12 may be effected by slightly shifting the LTE symbols LTE_S1, LTE_52, LTE_S3 by said auxiliary signals a1, a2, a3. The PAPR reduction enables a more efficient operation of the amplifier 210 (Fig. 1).

In other words, according to an embodiment, the device 100 is capable of determining the beat signal of the combined signal at an early processing stage thus enabling to provide suitable auxiliary signals for insertion into at least one input signal S1 to reduce a PAPR of the combined signal S12 in real time.

As already mentioned above, Figures 8a to 8f each depict a complementary cumulative distribution function (CCDF) of a beat signal as obtained from simulations of different operational scenarios according to the embodiments.

A horizontal axis of the respective diagrams represents a peak to average power ratio $\gamma$ in dB, and a vertical axis represents a probability that the peak to average power ratio is larger than the peak to average power ratio $\gamma$.

The results of Fig. 8a have been obtained by a simulation with the following parameters: The first input signal S1 (Fig. 1) is a 10 MHz LTE signal of 64QAM modulation, and the second input signal S2 is a 1-carrier UMTS signal of test model 1, 64 DPCH. These two signals are normalized to have same average power level and a sampling rate of 15.36MHz. The simulation results according to Fig. 8a comprise various first curves collectively denoted by reference numeral C1a. These curves represent the PAPR probability of the beat signal |S1| + |S2| of input signals S1, S2 without application of the method according to the embodiments, but with random delay between the entire LTE signal S1 and the UMTS signal S2.

The method according to the embodiments may also be denoted as "adaptive zero insertion" if auxiliary signals having zero amplitude are considered.

In contrast, the further three curves C2a of Fig. 8a represent the PAPR probability of the beat signal |S1| + |S2| of input signals S1, S2 with application of the method according to the embodiments. The difference between the three curves collectively denoted with reference numeral C2a is the maximal allowed length of the auxiliary signals inserted between the OFDM symbols of the LTE signal S1.

Generally, Applicant's simulations show that the larger the maximal allowed length of the auxiliary signals (also denoted as "insertion number $N_{zero}$", because for time discrete digital values of Signal S1 the length of an auxiliary signal may be expressed as multiple of a single sample time, which is related to the sampling rate of 15.36MHz in a per se known manner) is, the smaller the PAPR probability of the beat signal.

The insertion number $N_{zero}$ of the rightmost curve of group C2a was set to 5 samples, which indicates maximal insertion of 5 zeros (i.e., an auxiliary signal comprising zero amplitude and a length of 5 sampling times, presently 5* (1/15.36MHz)) between two LTE symbols LTE_S1, LTE_S2 (Figure 3). In the simulation the length of LTE signal S1 was only increased by 0.232%. In other words, only 2 zeros samples (i.e., auxiliary signals having a length of two sampling times) in average are inserted between two LTE symbols. The leftmost curve of group C2a denotes the PAPR reduction performance for a maximal insertion number $N_{zero}$ of 15, and the middle curve of group C2a corresponds with $N_{zero}$ =10.

According to Applicant's analysis, since the LTE and UMTS signals S1, S2 are almost random signal and Gauss distributed, one does not need to introduce much more than a few zeros (i.e. auxiliary signals comprising a length of a few sampling times) to achieve a reasonable good performance in terms of PAPR reduction.

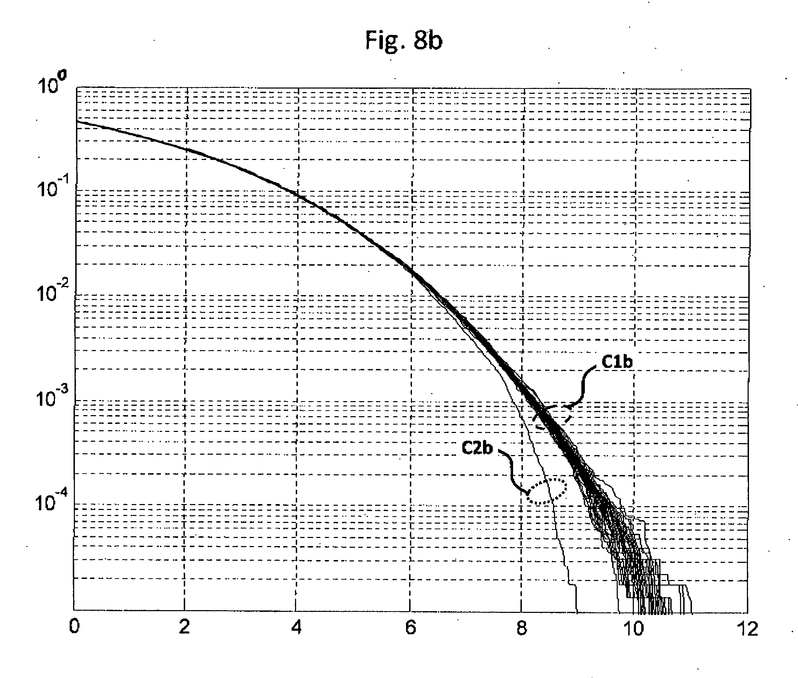

Figure 8b shows simulation results for a case of transmitting two LTE signals of different modulations as signals S1, S2. The principle for the case of two LTE signal is similar to the case containing only one LTE signal, cf. Figure 8a above. Presently, since both input signals S1, S2 are OFDM signals, i.e. comprising a sequence of OFDM symbols, one can apply the auxiliary signals according to the embodiments for both signals S1, S2 to shift both LTE symbol streams S1, S2 individually. The simulation results depicted by Fig. 8b are based on two LTE signals S1, S2 of 64 QAM, wherein curve C2b is obtained for application of the method according to the embodiments, and wherein the further curves C1b are obtained without application of the method according to the embodiments.

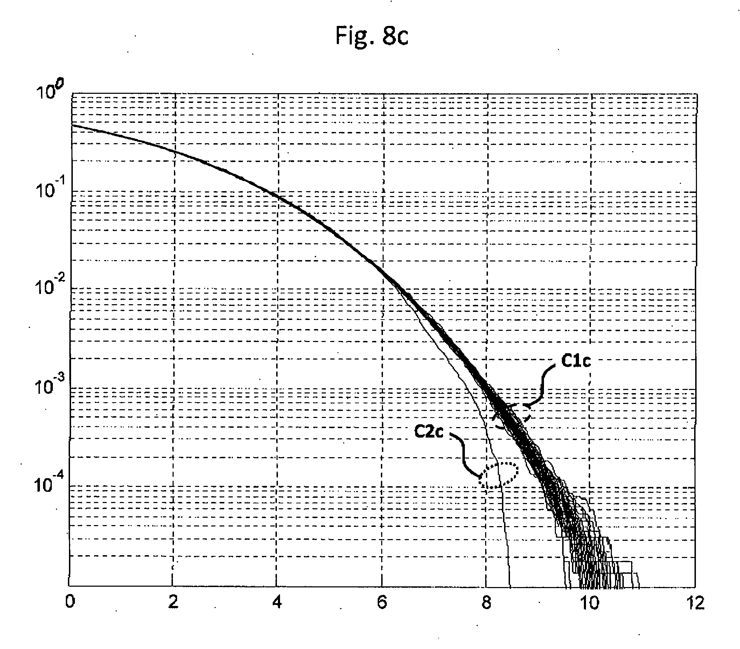

The simulation results depicted by Fig. 8c are based on two LTE signals S1, S2 of 16 QAM (quadrature amplitude modulation) each, wherein curve C2c is obtained for application of the method according to the embodiments, and wherein the further curves C1c are obtained without application of the method according to the embodiments.

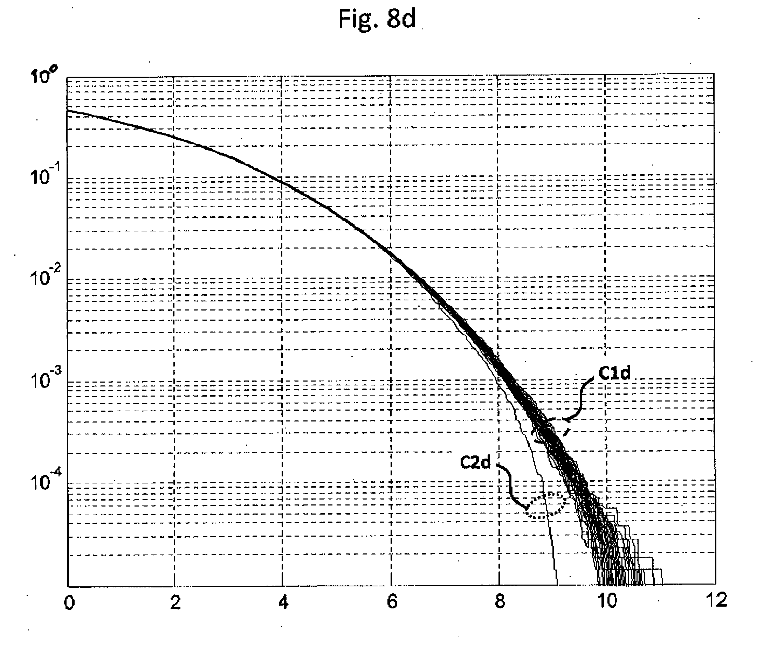

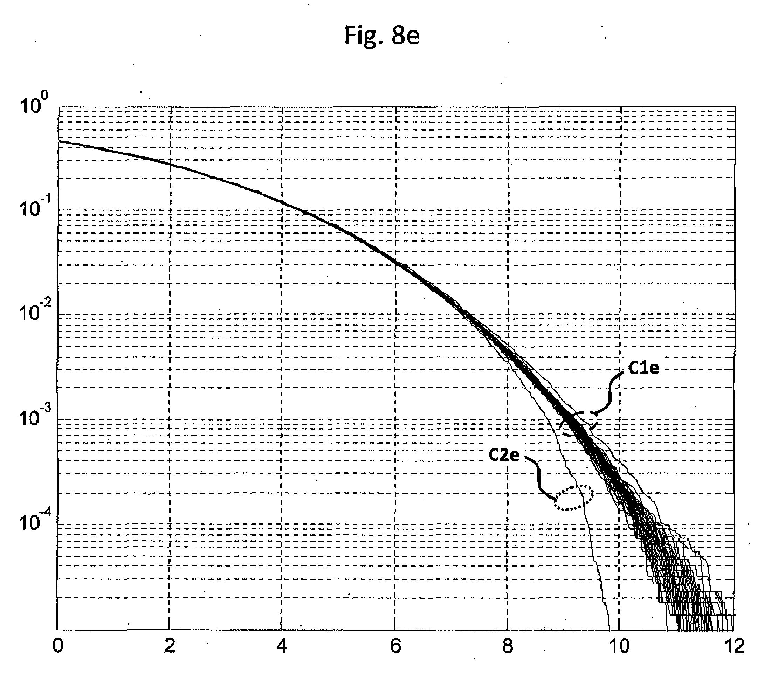

The simulation results depicted by Fig. 8d are based on two LTE signals S1, S2 of QPSK (quadrature phase shift keying), wherein curve C2d is obtained for application of the method according to the embodiments, and wherein the further curves C1d are obtained without application of the method according to the embodiments. The simulation results depicted by Fig. 8e are based on a first LTE signal S1 with 64 QAM and a second LTE signal S2 with 16 QAM, wherein curve C2e is obtained for application of the method according to the embodiments, and wherein the further curves C1e are obtained without application of the method according to the embodiments.

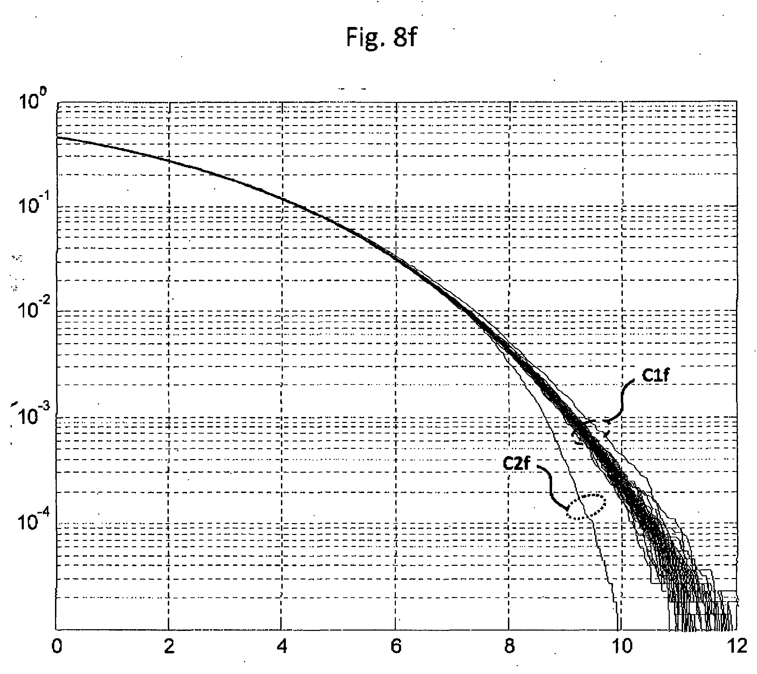

The simulation results depicted by Fig. 8f are based on a first LTE signal S1 with 16 QAM and a second LTE signal S2 with QPSK, wherein curve C2f is obtained for application of the method according to the embodiments, and wherein the further curves C1f are obtained without application of the method according to the embodiments.

All cases Fig. 8a to 8f have been simulated assuming 100% load.

As can be seen, the simulation results for two LTE signals S1, S2 are similar to the simulation results in the case of LTE and UMTS signal. And the length of the LTE sequences is extended about 0.3 percent in average due to the application of the method according to the embodiments. Furthermore, for the case of two LTE signals S1, S2 with different modulations (Fig. 8e, 8f) one can observe similar performance of the proposed method with similar length extension ratio.

Generally, the method according to the embodiments provides an efficient and consistent PAPR improvement of the beat signal (and thus also of the combined signal S12 (Fig. 1)) of different combinations of varieties of input signals S1, S2 by insertion of auxiliary signals a1, a2, a3 with zero amplitude between LTE symbols. If the number of inserted zeros is very small as proposed for a preferred embodiment, no impact would be raised at a receiver side. For receiver device it looks like that the signal propagation delay over air changes slightly. Thus, the method according to the embodiments do not require modifications on the receiver side, but may rather employ conventional receivers.

According to a further embodiment, using auxiliary signals with nonzero amplitude is also possible and yields further degrees of freedom regarding PAPR reduction. Preferably, in these cases, the auxiliary signals have a shape known at both the transmitter 200 and the receivers to facilitate efficient demodulation.

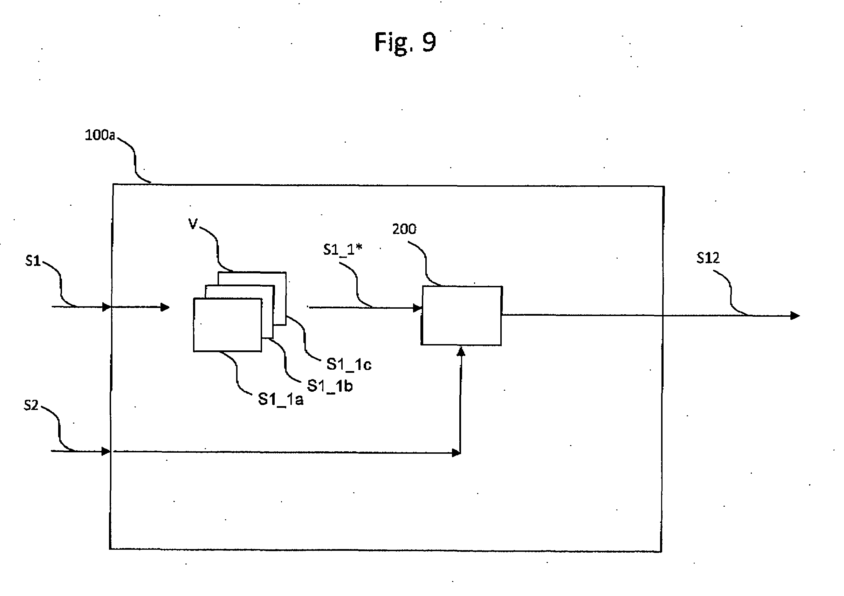

Figure 9 schematically depicts a simplified block diagram of a signal processing device 100a according to a further embodiment. At its inputs, the device 100a receives the first input signal S1 and the second input signal S2. Advantageously, the device 100a determines at least two different variants V of the modified first input signal S1_1 depending on the first input signal S1. This is performed by inserting one or more auxiliary signals a1, a2, a3 (Fig. 3) at either different positions or by applying auxiliary signals of different lengths, and the like. For those different variants V of the modified first input signal, a peak to average power ratio of the combined signal S12 or a beat signal and/or a PAPR of the beat signal is calculated which enables to determine which one of the variants V yields the best, i.e. smallest, peak to average power ratio. This specific variant S1_1* is thereupon selected for further processing, i.e. this variant S1_1* is combined by means of the adder 206 (figure 1) with the second input signal S2 or the upconverted second input signal S2', respectively. Likewise, the previously selected specific variant S1_1* of the modified input signal may also be upconverted prior to combining with the upconverted second input signal.

The step of combining and further optional processing steps such as e.g. predistortion and amplification by the power amplifier 210 (figure 1) are performed by the transmitter means 200, which are also integrated into the processing device 100a depicted by figure 9.

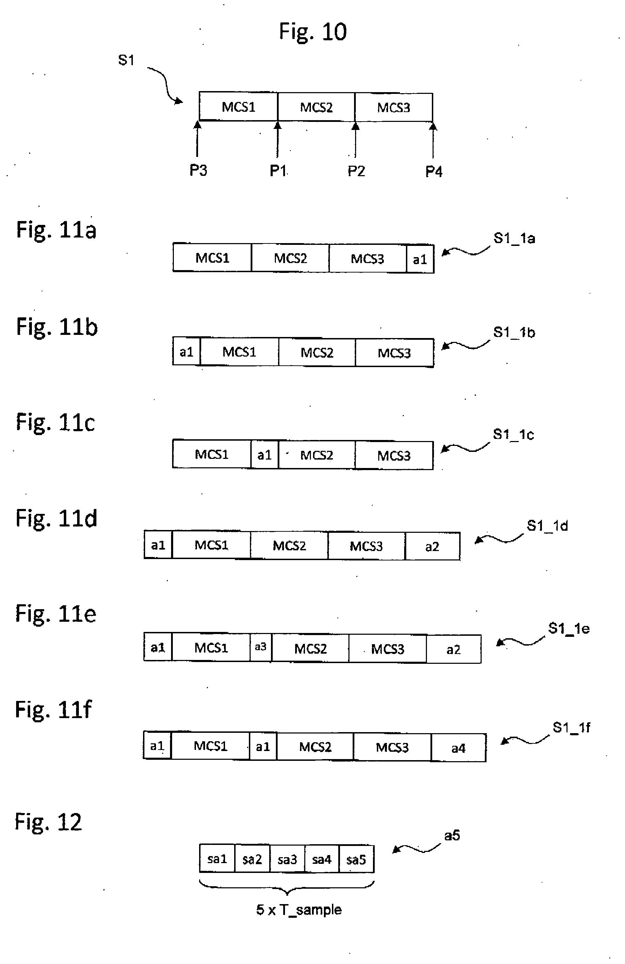

Figure 10 schematically depicts a first input signal S1 according to an embodiment, which presently comprises three subsequent multi carrier symbols MCS1, MCS2, MCS3. The multi carrier symbols may e.g. represent OFDM symbols as provided by the LTE standard. Other multi carrier symbols are also possible.

Also depicted by figure 10 are four different positions P1, P2, P3, P4, where auxiliary signals according to the embodiments may be inserted into the first input signal S1 to achieve different variants of modified input signals based on said input signal S1. Such different variants of modified input signals are depicted by figure 11a to 11f, the different variants being denoted by the reference numerals S1_1a, ... S1_1f.

For example, the modified input signal S1_1a according to figure 11a comprises the sequence of the three multi carrier symbols MCS1, MCS2, MCS3 and a first auxiliary signal a1, which is appended to the third multi carrier symbol MCS3.

In contrast, the signal variant according to figure 11b denoted by reference numeral S1_1b comprises the sequence MCS1, MCS2, MCS3 with the first auxiliary signal appended at an end of the first multi carrier symbol MCS1.

Further variants are given by the further figures 11c to 11f.

Figure 12 depicts an auxiliary signal a5 according to an embodiment. The auxiliary signal a5 comprises five samples sa1, sa2, sa3, sa4, sa5, and the signal duration of the auxiliary signal a5 correspondingly comprises 5xT_sample. Advantageously, the signal duration of the auxiliary signal according to the embodiments is defined in multiples of the sample duration when implementing the method according to the embodiments in a processing device 100 that operates with digital input signals S1, S2. For example when processing LTE signals as said first input signal S1, the sampling rate may be about 15.36 MHz, whereby the sample time T_sample is correspondingly defined to comprise 1/(15,36 MHz).

To summarize, providing and inserting the auxiliary signal a1 according to the embodiments advantageously enables to influence a PAPR of a beat signal and thus also the PAPR of the combined signal S12 that may be supplied to a power amplifier and thus enables to operate the power amplifier with high efficiency.

According to a further embodiment, the insertion of an auxiliary signal a1 may also be considered as shifting in time or delaying LTE symbols by inserting said auxiliary signal between these LTE symbols. In this context, a resultant beat signal of the signals S1_1 and S2 possibly has a lower PAPR value than a beat signal of the signals S1 and S2.

It is recommendable to limit the length of an auxiliary signal to be inserted to a maximum value in order not to affect signal reception on the receiver side due to excessive delay between subsequent OFDM/LTE symbols. Said maximum value may e.g. be expressed by a multiple of sample times which can be inserted between two LTE symbols.

According to a further embodiment, the device 100 may choose a fragment of a UMTS signal S2 of predetermined length, said fragment preferably having the same length as a sum of LTE symbols of the LTE input signal S1 plus a maximal zero number $N_{zero}$. Moreover, it is proposed to shift the LTE symbol(s) in time domain as shown in Fig. 3 and optionally to compute a maximal beat signal of each variation of shifting, i.e. each variant of auxiliary signal insertion. Subsequently, the device 100 chooses the variant V of shifting which has a smallest value of a maximum of the associated beat signal. After this variant V is chosen, the LTE input signal S1 is correspondingly modified by insertion of the corresponding auxiliary signals, and then the modified signal S1_1 may be upconverted for combination with an also upconverted second input signal S2'.

According to a further embodiment, auxiliary signals may also be inserted between different groups of subsequent OFDM symbols. However, since the number of positions for potential insertion of an auxiliary signal is reduced thereby, this variant comprises a reduced potential for PAPR reduction.

According to a further embodiment, the insertion of the auxiliary signal(s) is performed e.g. in time domain, i.e after an IFFT (inverse Fast Fourier Transform) stage and typically also cyclic prefix insertion stage of an OFDM symbol processing chain.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, a11 examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Method of processing at least two input signals (S1, S2) for a transmitter (200) of a communications device, particularly for a transmitter (200) of a cellular communications system, wherein signals (S1_1', S2') derived from said at least two input signals (S1, S2) are combined (410) with each other, preferably by means of an adder (206), to obtain a combined signal (S12), and wherein at least one predetermined auxiliary signal (a1, a2, a3) is inserted (400) into at least a first one (S1) of said two input signals (S1, S2) by means of a signal processing device (100) to obtain a modified first input signal (S1_1).

2. Method according to claim 1, wherein a first one (S1) of said input signals (S1, S2) is a multi-carrier modulated signal, particularly a signal (S1) comprising a plurality of OFDM, Orthogonal Frequency-Division Multiplexing, symbols.

3. Method according to claim 1 or 2, wherein a second one (S2) of said input signals (S1, S2) is a) a multi-carrier modulated signal, particularly a signal comprising a plurality of OFDM symbols, or b) another type of signal, particularly a UMTS, Universal Mobile Telecommunications System, signal.

4. Method according to one of the claims 2 to 3, wherein said step of inserting (400) comprises delaying a specific OFDM symbol (LTE_S3) so as to obtain a gap between a preceding OFDM symbol (LTE_S2) and said specific OFDM symbol (LTE_S3) and inserting said auxiliary signal (a1) into said gap.

5. Method according to one of the preceding claims, wherein said auxiliary signal (a1, a2, a3) is a) a zero signal having zero amplitude, or b) a nonzero signal having a predetermined signal shape, wherein said predetermined signal shape is preferably known both at said transmitter (200) and at a receiver.

6. Method according to one of the preceding claims, wherein said signal processing device (100) determines a beat signal, which represents a sum of absolute values of said input signals (S1, S2).

7. Method according to one of the preceding claims, wherein said signal processing device (100) determines at least two different variants (V, S1_1a, S1_1b, .., S1_1f) of said modified first input signal (S1_1) depending on said first input signal (S1) by at least one of the following steps:

    - inserting the same auxiliary signal (a1, a2, a3) at different positions of said first input signal (S1),
    - inserting different auxiliary signals (a1, a2, a3) into said first input signal (S1) at at least one same or different position(s) of said first input signal (S1).

**8.** Method according to claim 7, wherein said signal processing device (100) determines for two or more of said variants (V, S1_1a, S1_1b, .., S1_1f) a) a measure which characterizes a peak-to-average power ratio of said combined signal (S12) and/or b) a beat signal, which represents a sum of absolute values of a respective variant (V) of said modified first input signal (S1_1a) and said second input signal (S2), and wherein said signal processing device (100) selects a specific variant (S1_1*) for further processing, which satisfies at least one predetermined criterion with respect to said peak-to-average power ratio of said combined signal (S12) and/or said beat signal.

**9.** Method according to claim 8, wherein said step of selecting for further processing comprises combining said specific variant (S1_1*), or a signal derived therefrom, with said second signal (S2) or a signal (S2') derived from said second signal (S2).

**10.** Method according to one of the preceding claims, wherein said combined signal (S12) or a signal derived therefrom is amplified by an amplifier (210).

**11.** Method according to one of the preceding claims, wherein said signals (S1_1', S2') derived from said at least two input signals (S1, S2) are obtained by upconverting the modified first input signal (S1_1) and the second signal (S2) to a radio frequency range.

**12.** Signal processing device (100) for processing at least two input signals (S1, S2) for a transmitter (200) of a communications device, particularly for a transmitter (200) of a cellular communications system, wherein signals (S1_1', S2') derived from said at least two input signals (S1, S2) are combined (410) with each other, preferably by means of an adder (206), to obtain a combined signal (S12), wherein said signal processing device (100) is configured to insert (400) at least one predetermined auxiliary signal (a1, a2, a3) into at least a first one (s1) of said two input signals (S1, S2) to obtain a modified first input signal (S1_1).

**13.** Signal processing device (100) according to claim 12, wherein said signal processing device (100) is configured to determine at least two different variants (V, S1_1a, S1_1b, .., S1_1f) of said modified first input signal (S1_1) depending on said first input signal (S1) by at least one of the following steps:

- inserting the same auxiliary signal (a1, a2, a3) at different positions of said first input signal (S1),
- inserting different auxiliary signals (a1, a2, a3) into said first input signal (S1) at at least one same or different position(s) of said first input signal (S1).

**14.** Signal processing device (100) according to claim 13, wherein said signal processing device (100) is configured to determine for two or more of said variants (V, S1_1a, S1_1b, .., S1_1f) a) a measure which characterizes a peak-to-average power ratio of said combined signal (S12) and/or b) a beat signal, which represents a sum of absolute values of a respective variant (V) of said modified first input signal (S1_1a) and said second input signal (S2), and wherein said signal processing device (100) is configured to select a specific variant (S1_1*) for further processing, which satisfies at least one predetermined criterion with respect to said peak-to-average power ratio of said combined signal (S12) and/or said beat signal.

**15.** Signal processing device (100) according to one of the claims 14 to 16, wherein said signal processing device (100) is configured to insert (400) a predetermined auxiliary signal (a1, a2, a3) into two or more of said input signals (S1, S2).

**Amended claims in accordance with Rule 137(2) EPC.**

**1.** Method of processing at least two input signals (S1, S2) for a transmitter (200) of a communications device, particularly for a transmitter (200) of a cellular communications system, wherein signals (S1_1', S2') derived from said at least two input signals (S1, S2) are combined (410) with each other, preferably by means of an adder (206), to obtain a combined signal (S12), and wherein at least one predetermined auxiliary signal (a1, a2, a3) is inserted (400) into at least a first one (S1) of said two input signals (S1, S2) by means of a signal processing device (100) to obtain a modified first input signal (s1_1).

**2.** Method according to claim 1, wherein a first one (S1) of said input signals (S1, S2) is a multi-carrier modulated signal, particularly a signal (S1) comprising a plurality of OFDM, Orthogonal Frequency-Division Multiplexing, symbols.

**3.** Method according to claim 1 or 2, wherein a second one (S2) of said input signals (S1, S2) is a) a multi-carrier modulated signal, particularly a signal comprising a plurality of OFDM symbols, or b) another type of signal, particularly a UMTS, Universal Mobile Telecommunications System, signal.

**4.** Method according to one of the claims 2 to 3, wherein said step of inserting (400) comprises delaying a specific OFDM symbol (LTE_S3) so as to obtain a gap between a preceding OFDM symbol (LTE_S2) and said specific OFDM symbol (LTE_S3) and inserting said auxiliary signal (a1) into said gap.

**5.** Method according to one of the preceding claims, wherein said auxiliary signal (a1, a2, a3) is a) a zero signal having zero amplitude, or b) a nonzero signal having a predetermined signal shape, wherein said predetermined signal shape is preferably known both at said transmitter (200) and at a receiver.

**6.** Method according to one of the preceding claims, wherein said signal processing device (100) determines a beat signal, which represents a sum of absolute values of said input signals (S1, S2).

**7.** Method according to one of the preceding claims, wherein said signal processing device (100) determines at least two different variants (V, S1_1a, S1_1b, .., S1_1f) of said modified first input signal (S1_1) depending on said first input signal (S1) by at least one of the following steps:

    - inserting the same auxiliary signal (a1, a2, a3) at different positions of said first input signal (S1),
    - inserting different auxiliary signals (a1, a2, a3) into said first input signal (S1) at at least one same or different position(s) of said first input signal (S1).

**8.** Method according to claim 7, wherein said signal processing device (100) determines for two or more of said variants (V, S1_1a, S1_1b, .., S1_1f) a) a measure which characterizes a peak-to-average power ratio of said combined signal (S12) and/or b) a beat signal, which represents a sum of absolute values of a respective variant (V) of said modified first input signal (S1_1a) and said second input signal (S2), and wherein said signal processing device (100) selects a specific variant (S1_1*) for further processing, which satisfies at least one predetermined criterion with respect to said peak-to-average power ratio of said combined signal (S12) and/or said beat signal.

**9.** Method according to claim 8, wherein said step of selecting for further processing comprises combining said specific variant (S1_1*), or a signal derived therefrom, with said second signal (S2) or a signal (S2') derived from said second signal (S2).

**10.** Method according to one of the preceding claims, wherein said combined signal (S12) or a signal derived therefrom is amplified by an amplifier (210).

**11.** Method according to one of the preceding claims, wherein said signals (S1_1', S2') derived from said at least two input signals (S1, S2) are obtained by upconverting the modified first input signal (S1_1) and the second signal (S2) to a radio frequency range.

**12.** Signal processing device (100) for processing at least two input signals (S1, S2) for a transmitter (200) of a communications device, particularly for a transmitter (200) of a cellular communications system, wherein signals (S1_1', S2') derived from said at least two input signals (S1, S2) are combined (410) with each other, preferably by means of an adder (206), to obtain a combined signal (S12), wherein said signal processing device (100) is configured to insert (400) at least one predetermined auxiliary signal (a1, a2, a3) into at least a first one (s1) of said two input signals (S1, S2) to obtain a modified first input signal (S1_1).

**13.** Signal processing device (100) according to claim 12,
wherein said signal processing device (100) is configured to determine at least two different variants (V, S1_1a, S1_1b, .., S1_1f) of said modified first input signal (S1_1) depending on said first input signal (S1) by at least one of the following steps:

    - inserting the same auxiliary signal (a1, a2, a3) at different positions of said first input signal (S1),
    - inserting different auxiliary signals (a1, a2, a3) into said first input signal (S1) at at least one same or different position(s) of said first input signal (S1).

**14.** Signal processing device (100) according to claim 13, wherein said signal processing device (100) is configured to determine for two or more of said variants (V, S1_1a, S1_1b, .., S1_1f) a) a measure which characterizes a peak-to-average power ratio of said combined signal (S12) and/or b) a beat signal, which represents a sum of absolute values of a respective variant (V) of said modified first input signal (S1_1a) and said second input signal (S2), and wherein said signal processing device (100) is configured to select a specific variant (S1_1*) for further processing, which satisfies at least one predetermined criterion with respect to said peak-to-average power ratio of said combined signal (S12) and/or said beat signal.

15. Signal processing device (100) according to one of the claims 12 to 14, wherein said signal processing device (100) is configured to insert (400) a predetermined auxiliary signal (a1, a2, a3) into two or more of said input signals (S1, S2).

Fig. 1

Fig. 2

Fig. 3

## Fig. 4

## Fig. 5

## Fig. 6a

## Fig. 6b

## Fig. 7

Fig. 8a

Fig. 8b

EP 2 706 714 A1

Fig. 8c

Fig. 8d

EP 2 706 714 A1

Fig. 8e

EP 2 706 714 A1

## Fig. 8f

EP 2 706 714 A1

Fig. 9

S12

200

S1_1*

S1_1c

S1_1b

S1_1a

V

100a

S1

S2

## Fig. 10

S1

| MCS1 | MCS2 | MCS3 |
|------|------|------|

P3          P1          P2          P4

## Fig. 11a

| MCS1 | MCS2 | MCS3 | a1 |
|------|------|------|----|

S1_1a

## Fig. 11b

| a1 | MCS1 | MCS2 | MCS3 |
|----|------|------|------|

S1_1b

## Fig. 11c

| MCS1 | a1 | MCS2 | MCS3 |
|------|----|----|------|

S1_1c

## Fig. 11d

| a1 | MCS1 | MCS2 | MCS3 | a2 |
|----|------|------|------|----|

S1_1d

## Fig. 11e

| a1 | MCS1 | a3 | MCS2 | MCS3 | a2 |
|----|------|----|----|------|----|

S1_1e

## Fig. 11f

| a1 | MCS1 | a1 | MCS2 | MCS3 | a4 |
|----|------|----|----|------|----|

S1_1f

## Fig. 12

| sa1 | sa2 | sa3 | sa4 | sa5 |
|-----|-----|-----|-----|-----|

a5

5 x T_sample

## Fig. 13a

## Fig. 13b

Europäisches
Patentamt

European
Patent Office

Office européen
des brevets

# EUROPEAN SEARCH REPORT

Application Number

EP 12 29 0298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/015967 A1 (PERETS YONA [IL] ET AL) 21 January 2010 (2010-01-21) * paragraphs [0061], [0071], [0111]; figures 5,6 * ----- | 1-15 | INV. H04L27/26 H04B1/00 H04L27/00 |
| X | WO 2010/149822 A1 (NOKIA CORP [FI]; VAEISAENEN RISTO [FI]) 29 December 2010 (2010-12-29) * page 10 - page 12; figures 4,5 * ----- | 1-15 | |
| A | US 2009/163157 A1 (ZOLFAGHARI ALIREZA [US]) 25 June 2009 (2009-06-25) ----- | 1-15 | |

TECHNICAL FIELDS
SEARCHED      (IPC)

H04L
H04B

The present search report has been drawn up for all claims

| Place of search | Date of completion of the search | Examiner |
|---|---|---|
| Berlin | 12 March 2013 | González Gutiérrez |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.....................................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 29 0298

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2013

| Patent document cited in search report | | Publication date | Patent family member(s) | | Publication date |
|---|---|---|---|---|---|
| US 2010015967 | A1 | 21-01-2010 | CN | 102089986 A | 08-06-2011 |
| | | | EP | 2301159 A2 | 30-03-2011 |
| | | | JP | 2011528523 A | 17-11-2011 |
| | | | KR | 20110052576 A | 18-05-2011 |
| | | | US | 2010015967 A1 | 21-01-2010 |
| | | | US | 2012149427 A1 | 14-06-2012 |
| | | | US | 2013058300 A1 | 07-03-2013 |
| | | | WO | 2010007562 A2 | 21-01-2010 |
| WO 2010149822 | A1 | 29-12-2010 | CN | 102460978 A | 16-05-2012 |
| | | | EP | 2446540 A1 | 02-05-2012 |
| | | | US | 2012170682 A1 | 05-07-2012 |
| | | | WO | 2010149822 A1 | 29-12-2010 |
| US 2009163157 | A1 | 25-06-2009 | NONE | | |

EPO FORM P0459

For more details about this annex : see Official Journal of the European Patent Office, No. 12/82